# EUROPÄISCHE PATENTSCHRIFT

(11) **EP 1 918 254 B1**
(45) Veröffentlichungstag und Bekanntmachung des Hinweises auf die Patenterteilung: **12.05.2010**
(21) Anmeldenummer: 07020570.3
(22) Anmeldetag: 20.10.2007
(51) Int. Cl.: C02F 3/28

(54) **Tropfkörpereinheit und Verwendung einer Tropfkörperabdeckung**
Trickling filter device and use of trickling filter cover
Unité de filtre percolateur et l'utilisation d'un recouvrement de filtre percolateur

(30) Priorität: 06.11.2006 DE 202006017035 U
(43) Veröffentlichungstag der Anmeldung: 07.05.2008
(73) Patentinhaber: GEA 2H Water Technologies GmbH, 48493 Wettringen (DE)
(72) Erfinder: Marggraff, Martin, 52146 Würselen (DE); Kegebein, Jörg, 52068 Aachen (DE)
(74) Vertreter: Hauck Patent- und Rechtsanwälte

(56) Entgegenhaltungen:
- WO-A-2006/003026
- DE-A1- 3 904 103
- DE-A1-102004 030 366
- DE-C- 309 035
- DE-U1- 9 305 660
- DE-U1- 9 317 160
- FR-A- 344 746
- FR-A- 689 513
- FR-A- 2 457 260
- FR-A- 2 858 565
- US-A- 4 668 443
- US-A- 6 126 816

## Beschreibung

Die vorliegende Erfindung betrifft eine Tropfkörpereinheit für eine Abwasserbehandlungsanlage mit einem von einem porösen Körper gebildeten Tropfkörper, einer Anlage zum Verrieseln des Abwassers über dem Tropfkörper und einer Tropfkörperabdeckung.

Tropfkörpereinheiten sind bekannte Bestandteile von Abwasserbehandlungsanlagen. Sie besitzen einen von einem porösen Körper gebildeten Tropfkörper, auf den das zu behandelnde Abwasser verrieselt wird. Der poröse Körper wird üblicherweise von bestimmten Füllmaterialien (Schlacke, mineralische Schüttkörper etc.) gebildet, die dem Tropfkörper eine gewünschte Porosität verleihen. Im Betrieb des Tropfkörpers bildet sich an den Füllmaterialien ein biologischer Film aus, mittels dem die Abwasserbehandlung durchgeführt wird.

Bei bestimmten Verfahren der Abwasserbehandlung muss der Tropfkörper abgedeckt werden, um das Eindringen von Luftsauerstoff in den Tropfkörper zu verhindern. Dies ist beispielsweise dann der Fall, wenn man mit dem Tropfkörperverfahren eine gezielte Denitrifikation durchführt. Hierbei ist es bekannt, über dem Abwasserverteilsystem, bei dem es sich in der Regel um einen Drehsprenger handelt, eine feste Dachkonstruktion, beispielsweise eine GFK-Kuppel, zu montieren, und auf diese Weise einen Luftabschluss für den Tropfkörper herzustellen.

Eine Tropfkörpereinheit mit den Merkmalen des Oberbegriffs von Schutzanspruch 1 ist aus der DE 10 2004 030 366 A1 bekannt. Bei der bekannten Tropfkörpereinheit findet anstelle der bekannten festen Dachkonstruktion eine mehr oder weniger flexible Tropfkörperabdeckung Verwendung, die direkt auf der Oberseite des Tropfkörpers angeordnet ist. Dabei weist die Tropfkörperabdeckung, wenn sich die Verrieselungsanlage für das Abwasser über der Abdeckung befindet, kleine Wasserdurchtrittsöffnungen auf. Da sich im Betrieb der Einheit ein Wasserfilm bzw. eine Wasserschicht auf der Abdeckung ausbildet, wird das Eindringen von Luftsauerstoff in den Tropfkörper verhindert. Bei einer anderen Ausführungsform, bei der sich die Verrieselungsanlage unterhalb der Tropfkörperabdeckung befindet, sorgt die geschlossene Abdeckung dafür, dass kein Luftsauerstoff in den Tropfkörper eindringt.

Bei der bekannten Tropfkörpereinheit wird somit mit einfachen Mitteln bei einem Abwassereintrag in den Tropfkörper das gleichzeitige Eindringen von Luftsauerstoff in denselben verhindert.

Aus der FR-A-2457260 ist eine Tropfkörpereinheit bekannt, die eine gewellte Tropfkörperabdeckung aufweist, in der Öffnungen angeordnet sind, durch die das Abwasser dringen kann. Ähnlich ausgebildete gewellte Tropfkörperabdeckungen mit oder ohne Öffnungen sind aus der FR-A-344746, der FR-A-689513 und der FR-A-2858565 bekannt. Aus der US-A-6126816 sind siebförmig ausgebildete Tropfkörperabdeckungen bekannt.

Der vorliegenden Erfindung liegt die Aufgabe zugrunde, eine Tropfkörpereinheit der eingangs beschriebenen Art zu schaffen, die eine Tropfkörperabdeckung besitzt, welche bei luftdichter Abdeckung eine besonders gleichförmige kontrollierte Verteilung des einzutragenden Abwassers auf die Tropfkörperoberfläche ermöglicht.

Diese Aufgabe wird erfindungsgemäß bei einer Tropfkörpereinheit der angegebenen Art durch die kennzeichnenden Merkmale von Patentanspruch 1 gelöst.

Weiterbildungen der Erfindung gehen aus den Unteransprüchen hervor.

Bei der erfindungsgemäß ausgebildeten Tropfkörperabdeckung handelt es sich um ein kombiniertes Verteil- und Dichtsystem, das eine kontrollierte gleichförmige Verteilung des einzutragenden Abwassers auf die Oberfläche des Tropfkörpers bzw. in die obere Schicht des Tropfkörpers ermöglicht und gleichzeitig gasdicht ist. Das Abwasser wird von der Verrieselungsanlage auf die Vielzahl der parallelen Rinnenabschnitte (Abwasserverteilerrinnenabschnitte) verteilt und gelangt über die mindestens eine seitliche überlaufkante(Abwasserüberlaufkante) eines jeden Rinnenabschnittes in das Innere des Tropfkörpers. Die Gasdichtigkeit im Betrieb wird durch die Abdeckabschnitte zwischen den Rinnenabschnitten erreicht, die das Abwasser in die Abwasserverteilerrinnenabschnitte leiten und dort einen Aufstau herbeiführen. Dabei taucht im Betrieb mindestens eine seitliche Kante des Abdeckabschnittes in den Abwasserkörper, der sich im Abwasserverteilerrinnenabschnitt befindet, ein, so dass sich ein gasdichter Abschluss ergibt (Siphoneffekt).

In den Randbereichen der Tropfkörperoberfläche ist die aus den Abwasserverteilerrinnenabschnitten und den Abdeckabschnitten bestehende Tropfkörperabdeckung mit der Außenhülle des Tropfkörpers verbunden.

Im Betrieb sind daher immer alle Abwasserverteilerrinnenabschnitte mit Abwasser bis zur Überlaufkante gefüllt. Da die seitliche Kante des Abdeckabschnittes im Betrieb unter der Abwasserüberlaufkante des Abwasserverteilerrinnenabschnittes angeordnet ist und somit in den im Rinnenabschnitt befindlichen Abwasserkörper hineinragt, ist für eine gasdichte Verbindung zwischen Rinnenabschnitt und Abdeckabschnitt gesorgt. Es kann somit an keiner Stelle Luftsauerstoff in den Tropfkörper eindringen.

Die erfindungsgemäß ausgebildete Tropfkörperabdeckung aus Rinnenabschnitten und dazwischen angeordneten Abdeckabschnitten kann einstückig ausgebildet sein, wobei die Verbindung zwischen den Rinnenabschnitten und den Abdeckabschnitten beispielsweise über Verbindungsstege erfolgen kann. Die Tropfkörperabdeckung kann aber auch mehrteilig ausgebildet sein. So können beispielsweise ein Rinnenabschnitt und benachbarter Abdeckabschnitt zusammenhängend ausgebildet sein, wie später noch erläutert. Bei einer anderen Ausführungsform sind die Rinnenabschnitte und Abdeckabschnitte aus getrennten Profilen gebildet. Dabei erfolgt die Lagerung über entsprechende Befestigungssysteme oder eine Abstützung am Tropfkörper selbst.

Was die Form der Abdeckabschnitte anbetrifft, so sind diese im montierten Zustand im Querschnitt vorzugsweise trapezförmig oder in der Form eines umgedrehten V oder U ausgebildet. Bei einer anderen Ausführungsform sind die Abdeckabschnitte im Querschnitt gekrümmt, insbesondere halbkreisförmig, ausgebildet, wobei natürlich im montierten Zustand die Innenseite der Krümmung nach unten weist.

Was die Form der Rinnenabschnitte anbetrifft, so sind diese vorzugsweise im montierten Zustand im Querschnitt ebenfalls trapezförmig oder V- oder U-förmig ausgebildet.

Wie vorstehend erwähnt, werden die Abschnitte vorzugsweise von Einzelprofilen gebildet, die die vorstehend beschriebenen Formen besitzen. Entsprechende Befestigungssysteme, wie beispielsweise ein umlaufender Rahmen oder zwei gegenüberliegende Befestigungsprofile, sorgen für die korrekte Anordnung (mit den Abwasserdurchtrittsschlitzen) auf dem Tropfkörper. Besonders bevorzugt wird aber eine Ausführungsform, bei der die Verteilerrinnenabschnitte in das Füllmaterial des Tropfkörpers eingelassen und die Abdeckabschnitte auf das Füllmaterial aufgelegt sind. Bei dieser Ausführungsform kann somit eine zusätzliche Trag- bzw. Befestigungskonstruktion in Fortfall kommen. Allerdings muss natürlich ein luftdichter Abschluss in den seitlichen Bereichen der Tropfkörperabdeckung (Verbindung mit der Tropfkörpereinfassung) sichergestellt werden.

Bei einer anderen Ausführungsform der Erfindung sind ein Rinnenabschnitt und ein im montierten Zustand benachbarter Abdeckabschnitt von einem einzigen Profil gebildet, wobei eine Seitenwand des Rinnenabschnittes und eine Seitenwand des Abdeckabschnittes ineinander übergehen. Bei dieser Ausführungsform weist daher ein Profil immer sowohl einen Abdeckabschnitt als auch einen Rinnenabschnitt auf, so dass man insgesamt mit weniger Teilen auskommt als bei der vorstehend beschriebenen Ausführungsform, bei der jeweils ein Profil für einen Rinnenabschnitt und ein Profil für einen Abdeckabschnitt Verwendung findet. Auch bei dieser Ausführungsform ist das Profil, das gemeinsam den Rinnenabschnitt und Abdeckabschnitt bildet, im Abdeckabschnitt und/oder Verteilerrinnenabschnitt im montierten Zustand im Querschnitt trapezförmig, V-förmig oder U-förmig oder umgekehrt hierzu ausgebildet. Natürlich kann auch hierbei eine gekrümmte Ausführungsform Verwendung finden.

Wie bereits erwähnt, können die Rinnenabschnitte in das Füllmaterial des Tropfkörpers eingelassen sein und die Abdeckabschnitte auf der Oberseite des Füllmateriales aufliegen. Die Rinnenabschnitte können aber auch auf der Oberseite des Tropfkörpers angeordnet sein, und die Abdeckabschnitte können sich über der Oberseite des Tropfkörpers befinden. Es kann aber auch die gesamte Tropfkörperabdeckungskonstruktion freitragend über der Tropfkörperoberseite angeordnet sein.

Was die Verrieselungsanlage des Abwassers anbetrifft, so gelangt vorzugsweise ein Drehsprenger zum Einsatz, der beispielsweise mittig über der Tropfkörperabdeckung angeordnet sein kann.

Was die Überlaufkanten der Rinnenabschnitte anbetrifft, so können diese geradlinig, aber auch strukturiert ausgebildet sein. Beispielsweise kann die Überlaufkante als Zackenwehr ausgebildet sein. Auf diese Weise können Fremdpartikel zurückgehalten werden und es kann eine Vergleichmäßigung der Strömung erzielt werden.

Bei einer weiteren Ausführungsform der Erfindung ist die Tropfkörperabdeckung als Hohlkörper mit trichter- oder rinnenförmigen Einprägungen ausgebildet, wobei die Einprägungstiefe größer ist als der halbe Abstand zwischen Ober-und Unterseite des Hohlkörpers. Die Tropfkörperabdeckung ist daher bei dieser Ausführungsform einstückig ausgebildet, wobei natürlich mehrere nebeneinander angeordnete und miteinander verbundene Hohlkörper eine Gesamtabdeckung bilden können. Die Verbindung der Hohlkörper kann dabei beispielsweise über ein Nut-Feder-System erfolgen.

Die trichter- oder rinnenförmigen Einprägungen erstrecken sich von der Oberseite bzw. Unterseite des Hohlkörpers nach innen und sind innen offen. Die beiden Begrenzungswände der oberen trichterförmigen Einprägungen erstrecken sich in die durch die unteren trichterförmigen Einprägungen gebildeten Rinnen hinein. Da die Einprägungstiefe größer ist als der halbe Abstand zwischen Ober- und Unterseite des Hohlkörpers kann sich auch bei dieser Ausführungsform ein abdichtender Wasserkörper ausbilden. Die entsprechenden Hohlkörper werden beispielsweise nebeneinander auf der Tropfkörperoberfläche verlegt.

Die vorliegende Erfindung betrifft ferner die Verwendung einer Tropfkörperabdeckung für eine Tropfkörpereinheit der vorstehend beschriebenen Art.

Die Erfindung wird nachfolgend anhand von Ausführungsbeispielen in Verbindung mit der Zeichnung im Einzelnen erläutert. Es zeigen:
- Figur 1: einen Querschnitt durch den oberen Bereich eines mit einer Tropfkörperabdeckung versehenen Tropfkörpers;
- Figur 2: eine teilweise geschnittene räumliche Darstellung einer weiteren Ausführungsform einer Tropfkörperabdeckung;
- Figur 3: einen schematischen Querschnitt durch noch eine weitere Ausführungsform einer Tropfkörperabdeckung; und
- Figur 4: einen schematischen Querschnitt ähnlich Figur 3, der noch eine weitere Ausführungsform einer Tropfkörperabdeckung zeigt; und
- Figur 5: eine räumliche Ansicht einer weiteren Ausführungsform einer Tropfkörperabdeckung.

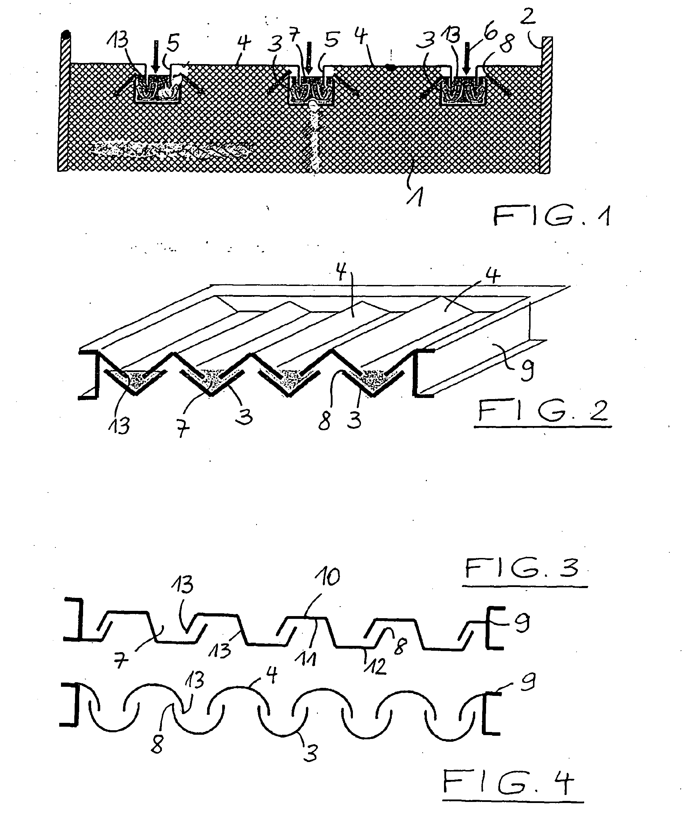

Die in Figur 1 schematisch dargestellte Tropfkörpereinheit besitzt einen Tropfkörper 1 aus porösem Material, der eine Einfassung 2 aufweist. Der Tropfkörper 1 ist beispielsweise in der Draufsicht rechteckig ausgebildet. Er setzt sich aus einzelnen übereinander angeordneten Schichten eines Füllmateriales zusammen. Derartige Füllmaterialien sind bekannt und werden an dieser Stelle nicht mehr im Einzelnen beschrieben. Beispielsweise kann es sich hierbei um Füllkörper aus Kunststoff oder um Lavaschlacke handeln. Wesentlich ist, dass das Füllmaterial einen relativ hohen Porositätsgrad besitzt, damit sich im Betrieb des Tropfkörpers ein biologischer Film auf dem Füllmaterial aufbauen kann.

Bei dem hier dargestellten Ausführungsbeispiel handelt es sich um einen Tropfkörper 1, der zur Denitrifikation verwendet wird.

Über der Oberseite des Tropfkörpers 1 befindet sich eine Anlage zum Verrieseln des Abwassers über dem Tropfkörper, bei der es sich beispielsweise um einen Drehsprenger handeln kann. Diese Anlage ist in Figur 1 nicht dargestellt. Sie kann von herkömmlicher Bauart sein und ist dem Fachmann bekannt. Damit im Betrieb der Tropfkörpereinheit kein Luftsauerstoff in den Tropfkörper 1 eindringen kann, weist dieser auf seiner Oberseite eine gasdichte Tropfkörperabdeckung auf. Bei der in Figur 1 dargestellten Ausführungsform besitzt die Tropfkörperabdeckung eine Vielzahl von parallelen Abwasserverteilerrinnen 3, die in das Füllmaterial des Tropfkörpers 1 eingelassen sind. Zwischen den Abwasserverteilerrinnen 3, die im installierten Zustand U-förmig ausgebildet sind, befinden sich Abdeckprofile 4, die im installierten Zustand in Form eines umgedrehten U ausgebildet sind. Die in Figur 1 nach unten weisenden Schenkel 5 der Abdeckprofile 4 erstrecken sich in die Verteilerrinnen hinein, und zwar tiefer als deren seitliche Kanten 8.

Im Betrieb der Tropfkörpereinheit füllen sich die Verteilerrinnen 3 mit Abwasser, wie in Figur 1 gezeigt. In jeder Verteilerrinne 3 bildet sich ein Wasserkörper 7 aus, der bis zu den seitlichen Kanten 8 reicht. Fließt nunmehr weiteres Abwasser nach, wie durch die Pfeile 6 angedeutet, gelangt das Abwasser über die als Überlaufkanten ausgebildeten seitlichen Kanten 8 in den Tropfkörper 1. Da sich die seitlichen Schenkel 5 der Abdeckprofile 4 bis unter die seitlichen Kanten 8 der Verteilerrinnen und damit in den Abwasserkörper 7 hinein erstrecken, kann keine Luft in den Füllkörper eindringen (Siphoneffekt). Der Tropfkörper 1 wird somit mit Abwasser beaufschlagt, ohne dass gleichzeitig Luft in den Tropfkörper eindringen kann. Die Abdeckprofile 4 liegen auf der Oberseite des Tropfkörpers 1 auf.

Die Verteilerrinnen 3 und die Abdeckprofile 4 können beispielsweise aus geeignetem Kunststoff hergestellt sein, so dass sich eine einfach handhabbare und montierbare Tropfkörperabdeckung mit geringem Gewicht ergibt.

Figur 2 zeigt eine weitere Ausführungsform einer Tropfkörperabdeckung. Bei dieser Ausführungsform sind die Verteilerrinnen 3 V-förmig ausgebildet, während die Abdeckprofile 4 die Form eines umgedrehten V besitzen. Auch hier bildet sich im Betrieb in jeder Verteilerrinne 3 ein Abwasserkörper 7 aus, der bis zu den seitlichen Kanten 8 der Verteilerrinnen reicht. Die Schenkel der Abdeckprofile 4 tauchen im Betrieb in diesen Abwasserkörper 7 ein, so dass sich auch bei dieser Ausführungsform im Betrieb ein luftdichter Abschluss ergibt.

Figur 2 zeigt ferner, dass die Tropfkörperabdeckung von einem umlaufenden Rahmen 9 umschlossen ist, der seitlich je einen Schenkel eines Abdeckprofils 4 trägt. Auf diese Weise wird auch am Rand ein luftdichter Abschluss erreicht. An die anderen beiden Seiten des umlaufenden Rahmens 9 stoßen die Verteilerrinnen 3 und Abdeckprofile 4 im rechten Winkel. Die Befestigung der Verteilerrinnen 3 und Abdeckprofile 4 am umlaufenden Rahmen 9 kann beispielsweise durch Schweißen erfolgen.

Bei der schematisch in Figur 3 gezeigten Ausführungsform einer Tropfkörperabdeckung werden ein Verteilerrinnenabschnitt 12 und ein benachbarter Abdeckabschnitt 11 von einem einzigen Profil 10 gebildet. Die eine Seitenwand des Verteilerrinnenabschnittes 12 geht hierbei in die eine Seitenwand des Abdeckabschnittes 11 über, wie bei 13 gezeigt. Die Verteilerrinnenabschnitte 12 und Abdeckabschnitte 11 sind hierbei trapezförmig ausgebildet. Auch diese Ausbildungsform besitzt einen umlaufenden Rahmen 9, an den in Figur 3 auf der rechten Seite ein Abdeckabschnitt und auf der linken Seite ein Verteilerrinnenabschnitt angeschlossen sind.

Die schematisch in Figur 4 dargestellte Ausführungsform besitzt im Schnitt halbkreisförmig ausgebildete Verteilerrinnen 3 und Abdeckprofile 4, die im installierten Zustand entgegengesetzt zueinander gerichtet sind.

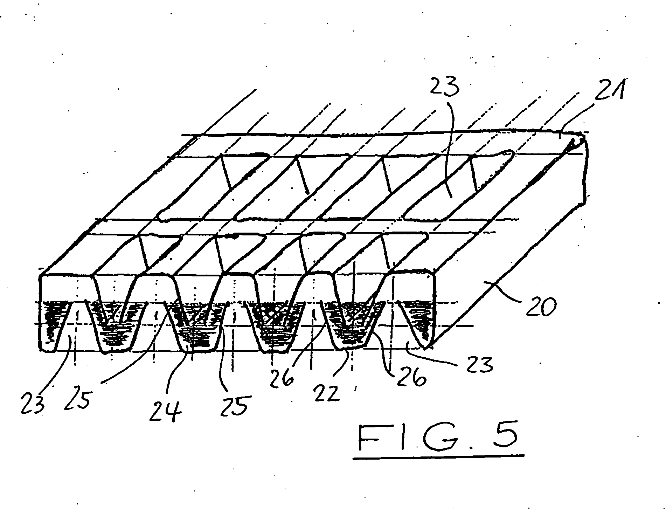

Figur 5 zeigt eine Tropfkörperabdeckung, die als Hohlkörper 20 ausgebildet ist, der eine ebene Oberseite 21 und eine ebene Unterseite 22 aufweist. Oberseite 21 und Unterseite 22 sind jeweils mit trichter- oder rinnenförmigen Einprägungen 23 versehen, die sich jeweils von der Oberseite bzw. Unterseite in den Hohlkörper hinein erstrecken und am Ende offen sind. Dabei weisen die von der Oberseite 21 ausgehenden Einprägungen 23 nach unten konvergierende Seitenwände 25 auf, welche in Rinnen 24 eintauchen, die von den Begrenzungswänden 26 der von der Unterseite 22 ausgehenden trichterförmigen Einprägungen 21 gebildet werden. Da sich die Seitenwände 25 in die Rinnen 24 hinein erstrecken, kann sich ein abdichtender Wasserkörper ausbilden. Die Einprägungen 23 sind bei diesem Ausführungsbeispiel nicht durchlaufend ausgebildet, sondern werden durch Querstege in einzelne Abschnitte unterteilt.

## Patentansprüche

1. Tropfkörpereinheit für eine Abwasserbehandlungsanlage mit einem von einem porösen Körper gebildeten Tropfkörper (1), einer Anlage zum Verrieseln des Abwassers über dem Tropfkörper (1) und einer Tropfkörperabdeckung, **dadurch gekennzeichnet, dass** die Tropfkörperabdeckung eine Vielzahl von parallelen Verteilerrinnenabschnitten (3, 12) mit je mindestens einer seitlichen Überlaufkante (8) und dazwischen angeordneten Abdeckabschnitten (4, 11), von denen mindestens eine seitliche Kante (13) in die Rinnenabschnitte (3, 12) hineinragt und sich unter der Überlaufkante (8) befindet, aufweist.

2. Tropfkörpereinheit nach Anspruch 1, **dadurch gekennzeichnet, dass** die Rinnenabschnitte (3) und Abdeckabschnitte (4) aus getrennten Profilen gebildet sind.

3. Tropfkörpereinheit nach Anspruch 1 oder 2, **dadurch gekennzeichnet, dass** die Abdeckabschnitte (4) im montierten Zustand im Querschnitt trapezförmig oder in der Form eines umgedrehten V oder U ausgebildet sind.

4. Tropfkörpereinheit nach Anspruch 1 oder 2, **dadurch gekennzeichnet, dass** die Abdeckabschnitte (4) im Querschnitt gekrümmt, insbesondere halbkreisförmig ausgebildet sind.

5. Tropfkörpereinheit nach einem der vorangehenden Abschnitte, **dadurch gekennzeichnet, dass** die Rinnenabschnitte (3, 12) im montierten Zustand im Querschnitt trapezförmig oder V- oder U-förmig ausgebildet sind.

6. Tropfkörpereinheit nach einem der Ansprüche 1 oder 3 bis 5, **dadurch gekennzeichnet, dass** ein Rinnenabschnitt (12) und ein im montierten Zustand benachbarter Abdeckabschnitt (11) von einem einzigen Profil (10) gebildet sind, wobei eine Seitenwand (13) des Rinnenabschnittes (12) und eine Seitenwand (13) des Abdeckabschnittes (11) ineinander übergehen.

7. Tropfkörpereinheit nach Anspruch 6, **dadurch gekennzeichnet, dass** das einzige Profil (10) im Abdeckabschnitt (11) und/oder Rinnenabschnitt (12) im montierten Zustand im Querschnitt trapezförmig, V-förmig oder U-förmig oder umgekehrt hierzu ausgebildet ist.

8. Tropfkörpereinheit nach einem der vorangehenden Ansprüche, **dadurch gekennzeichnet, dass** die Tropfkörperabdeckung einen umlaufenden Rahmen (9) oder zwei gegenüberliegende Befestigungsprofile zur Lagerung oder Befestigung an der Tropfkörpereinheit aufweist.

9. Tropfkörpereinheit nach Anspruch 8, **dadurch gekennzeichnet, dass** seitliche Abdeckabschnitte (4, 11) am umlaufenden Rahmen (9) oder den Befestigungsprofilen angeordnet sind.

10. Tropfkörpereinheit nach einem der vorangehenden Ansprüche, **dadurch gekennzeichnet, dass** die Rinnenabschnitte (3, 12) in das Füllmaterial des Tropfkörpers (1) eingelassen und die Abdeckabschnitte (4, 11) auf das Füllmaterial aufgelegt sind.

11. Tropfkörpereinheit nach einem der Ansprüche 1 bis 9, **dadurch gekennzeichnet, dass** die Rinnenabschnitte auf der Tropfkörperoberseite angeordnet sind.

12. Tropfkörpereinheit nach einem der Ansprüche 1 bis 9 oder 11, **dadurch gekennzeichnet, dass** die Tropfkörperabdeckung freitragend über der Tropfkörperoberseite angeordnet ist.

13. Tropfkörpereinheit nach einem der vorangehenden Ansprüche, **dadurch gekennzeichnet, dass** die Verrieselungsanlage des Abwassers einen Drehsprenger aufweist.

14. Tropfkörpereinheit nach einem der Ansprüche 1, 3-5, 8 oder 9, **dadurch gekennzeichnet, dass** die Tropfkörperabdeckung als Hohlkörper (20) mit trichter- oder rinnenförmigen Einprägungen (23) ausgebildet ist, wobei die Einprägungstiefe größer ist als der halbe Abstand zwischen Ober- und Unterseite (21, 22) des Hohlkörpers (20).

15. Tropfkörpereinheit nach Anspruch 14, **dadurch gekennzeichnet, dass** der Hohlkörper (20) eine ebene Oberseite (21) und Unterseite (22) aufweist.

16. Tropfkörpereinheit nach Anspruch 14 oder 15, **dadurch gekennzeichnet, dass** die Tropfkörperabdeckung mehrere nebeneinander angeordnete und miteinander verbundene Hohlkörper (20) aufweist.

17. Tropfkörpereinheit nach Anspruch 16, **dadurch gekennzeichnet, dass** die Hohlkörper (20) über ein Nut-FederSystem verbunden sind.

18. Verwendung einer Tropfkörperabdeckung die eine Vielzahl von parallelen Verteilerrinnenabschnitten (3, 12) mit je mindestens einer seitlichen Überlaufkante (8) und dazwischen angeordneten Abdeckabschnitten (4, 11), von denen mindestens eine seitliche Kante (13) in die Rinnenab- schnitte (3, 12) hineinragt und sich unter der Überlaufkante (8) befindet, aufweist, für eine Tropfkörpereinheit nach einem der vorangehenden Ansprüche.

## Claims

1. A Trickling filter unit for a waste water treatment plant comprising a trickling filter (1) formed by a porous body, a system for irrigating the waste water over the trickling filter (1) and a trickling filter covering, **characterized in that** the trickling filter covering has a plurality of parallel distributor flute portions (3, 12) with at least one lateral overflow edge (8) each and covering portions (4, 11) arranged therebetween of which at least one lateral edge (13) projects into the flute portions (3, 12) and is located beneath the overflow edge (8).

2. The trickling filter unit according to claim 1, **characterized in that** the flute portions (3) and covering portions (4) are formed by separate profiles.

3. The trickling filter unit according to claim 1 or 2, **characterized in that** the covering portions (4), in the mounted condition, are formed in cross-section trapezoidally or in the form of a reversed V or U.

4. The trickling filter unit according to claim 1 or 2, **characterized in that** the covering portions (4) are curved, especially semi-circularly formed, in cross-section.

5. The trickling filter unit according to one of the preceding claims, **characterized in that** the flute portions (3, 12), in the mounted condition, are formed trapezoidally or like a V or U in cross-section.

6. The trickling filter unit according to one of the claims 1 or 3 to 5, **characterized in that** a flute portion (12) and a covering portion (11) adjacent in its mounted condition are formed by a single profile (10) wherein a lateral wall (13) of the flute portion (12) and a lateral wall (13) of the covering portion (11) merge into another.

7. The trickling filter unit according to claim 6, **characterized in that** the single profile (10) in the covering portion (11) and/or flute portion (12), in the mounted condition, is formed trapezoidally, in a V-like manner or in a U-like manner or vice versa in cross-section.

8. The trickling filter unit according to one of the preceding claims, **characterized in that** the trickling filter covering has a surrounding frame (9) or two opposite profiles for the support or the mounting at the trickling filter unit.

9. The trickling filter unit according to claim 8, **characterized in that** lateral covering portions (4, 11) are disposed at the surrounding frame (9) or the fastening profiles.

10. The trickling filter unit according to one of the preceding claims, **characterized in that** the flute portions (3, 12) are embedded into the filling material of the trickling filter (1) and that the covering portions (4, 11) are laid upon the filling material.

11. The trickling filter unit according to one of the claims 1 to 9, **characterized in that** the flute portions are disposed on the upper side of the trickling filter.

12. The trickling filter unit according to one of the claims 1 to 9 or 11, **characterized in that** the trickling filter covering is disposed over the trickling filter upper side in a cantilevered manner.

13. The trickling filter unit according to one of the preceding claims, **characterized in that** the irrigation system of the waste water includes a rotating sprinkler.

14. The trickling filter unit according to one of the claims 1, 3-5, 8 or 9, **characterized in that** the trickling filter covering is formed as hollow body (20) with funnel-like or flute-like engravings (23) wherein the engraving depth is larger than the half distance between the upper side (21) and the lower side (22) of the hollow body (20).

15. The trickling filter unit according to claim 14, **characterized in that** the hollow body (20) has a plane upper side (21) and lower side (22).

16. The trickling filter unit according to claim 14 or 15, **characterized in that** the trickling filter covering has a plurality of hollow bodies (20) which are connected.

17. The trickling filter unit according to claim 16, **characterized in that** the hollow bodies (20) are connected by means of a groove and tongue system.

18. The use of a trickling filter covering having a plurality of parallel distributor flute portions (3, 12) with at least one lateral overflow edge (8) each and covering portions (4, 11) arranged therebetween of which at least one lateral edge (13) projects into the flute portions (3, 12) and is located beneath the overflow edge (8) for a trickling filter unit according to one of the preceding claims.

## Revendications

1. Unité de filtre percolateur destinée à une installation de traitement d'eaux usées, comprenant un filtre percolateur (1) formé par un corps poreux, une installation d'épandage des eaux usées par dessus le filtre percolateur (1) et un recouvrement de filtre percolateur, **caractérisée en ce que** le recouvrement de filtre percolateur présente une pluralité de segments de rigoles de distribution parallèles (3, 12) avec chacun au moins un bord déversoir latéral (8) et, disposés entre ceux-ci, des segments de recouvrement (4, 11) dont au moins un bord latéral (13) dépasse dans les segments de rigoles (3, 12) et se trouve en dessous du bord déversoir (8).

2. Unité de filtre percolateur selon la revendication 1, **caractérisée en ce que** les segments de rigoles (3) et les segments de recouvrement (4) sont formés par des profilés séparés.

3. Unité de filtre percolateur selon la revendication 1 ou 2, **caractérisée en ce que**, à l'état monté, les segments de recouvrement (4) ont une section trapézoïdale ou en forme de V ou de U renversé.

4. Unité de filtre percolateur selon la revendication 1 ou 2, **caractérisée en ce que** les segments de recouvrement (4) ont une section incurvée, en particulier de forme semi-circulaire.

5. Unité de filtre percolateur selon l'une des revendications précédentes, **caractérisée en ce que**, à l'état monté, les segments de rigoles (3, 12) ont une section trapézoïdale ou en forme de V ou de U.

6. Unité de filtre percolateur selon l'une des revendications 1 ou 3 à 5, **caractérisée en ce qu'**un segment de rigole (12) et un segment de recouvrement (11) voisin à l'état monté sont formés par un profilé (10) unique, une paroi latérale (13) du segment de rigole (12) et une paroi latérale (13) du segment de recouvrement (11) s'imbriquant l'une dans l'autre.

7. Unité de filtre percolateur selon la revendication 6, **caractérisée en ce que**, à l'état monté, le profilé (10) unique du segment de recouvrement (11) et/ou du segment de rigole (12) présente une section de forme trapézoïdale, en forme de V ou en forme de U, ou une forme inverse des précédentes.

8. Unité de filtre percolateur selon l'une des revendications précédentes, **caractérisée en ce que** le recouvrement de filtre percolateur présente un cadre périphérique (9) ou deux profilés de fixation opposés pour le supporter ou le fixer sur l'unité de filtre percolateur.

9. Unité de filtre percolateur selon la revendication 8, **caractérisée en ce que** des segments de recouvrement latéraux (4, 11) sont disposés sur le cadre périphérique (9) ou sur les profilés de fixation.

10. Unité de filtre percolateur selon l'une des revendications précédentes, **caractérisée en ce que** les segments de rigoles (3, 12) sont noyés dans le matériau de remplissage du filtre percolateur (1) et **en ce que** les segments de recouvrement (4, 11) sont posés sur le matériau de remplissage.

11. Unité de filtre percolateur selon l'une des revendications 1 à 9, **caractérisée en ce que** les segments de rigoles sont disposés sur le dessus du filtre percolateur.

12. Unité de filtre percolateur selon l'une des revendications 1 à 9 ou 11, **caractérisée en ce que** le recouvrement de filtre percolateur est disposé de manière non supportée sur le dessus du filtre percolateur.

13. Unité de filtre percolateur selon l'une des revendications précédentes, **caractérisée en ce que** l'installation d'épandage des eaux usées présente une tête d'arrosage automatique.

14. Unité de filtre percolateur selon l'une des revendications 1, 3 à 5, 8 ou 9, **caractérisée en ce que** le recouvrement de filtre percolateur est réalisé sous la forme d'un corps creux (20) avec des empreintes en forme d'entonnoir ou de rigole (23), la profondeur des empreintes étant plus grande que la moitié de la distance entre les faces supérieure (21) et inférieure (22) du corps creux (20).

15. Unité de filtre percolateur selon la revendication 14, **caractérisée en ce que** le corps creux (20) présente une face supérieure (21) et une face inférieure (22) planes.

16. Unité de filtre percolateur selon la revendication 14 ou 15, **caractérisée en ce que** le recouvrement de filtre percolateur présente plusieurs corps creux (20) disposés les uns à côté des autres et reliés entre eux.

17. Unité de filtre percolateur selon la revendication 16, **caractérisée en ce que** les corps creux (20) sont reliés par un système à rainure et languette.

18. Utilisation d'un recouvrement de filtre percolateur, qui présente une pluralité de segments de rigoles de distribution parallèles (3, 12) comprenant chacun au moins un bord déversoir latéral (8) et, disposés entre ceux-ci, des segments de recouvrement (4, 11) dont au moins un bord latéral (13) dépasse dans les segments de rigoles (3, 12) et se trouve en dessous du bord déversoir (8), pour une unité de filtre percolateur selon l'une des revendications précédentes.
